# EUROPEAN PATENT APPLICATION

(11) **EP 3 846 098 A2**
(43) Date of publication of application: **07.07.2021**
(21) Application number: 20213536.4
(22) Date of filing: 11.12.2020
(51) Int. Cl.: G06Q 10/06, G06Q 10/10

(54) **IOT DATA SIMULATOR AND VALIDATOR**

(30) Priority: 03.01.2020 US 202016733736
(71) Applicant: Otis Elevator Company, Farmington, Connecticut 06032 (US)
(72) Inventor: NANJAPPAN, Ezhil, Farmington, CT Connecticut 06032 (US); RAO, Sanjithraj, Farmington, ct Connecticut 06032 (US); PAHNG, Daniel, Farmington, CT Connecticut 06032 (US)
(74) Representative: Dehns

(57) **Abstract**

An IoT data simulator and validator platform (200) for an IoT connected system including: an IoT message simulator (252) including: an IoT message constructor (21) configured to simulate live IoT data (520) from a live IoT device (256) of the IoT connected system in the form of one or more messages (500); a test case constructor (22) configured to generate test cases for the one of more messages (500); and a simulation scenario builder (280) configured to establish relationships between the one or more messages (500).

## Description

### BACKGROUND

The embodiments herein relate to IoT systems, and specifically to a method and apparatus for simulating and validating IoT data.

Testing software of any IoT based system is often a time intensive endeavor as it may take a large amount of time to plan for test data for every conceivable scenario.

### BRIEF SUMMARY

According to an embodiment, an IoT data simulator and validator platform for an IoT connected system is provided. The IoT data simulator and validator platform including: an IoT message simulator including: an IoT message constructor configured to simulate live IoT data from a live IoT device of the IoT connected system in the form of one or more messages; a test case constructor configured to generate test cases for the one of more messages; and a simulation scenario builder configured to establish relationships between the one or more messages.

In addition to one or more of the features described herein, or as an alternative, further embodiments may include an IoT data validator configured to validate live IoT data from the live IoT device of the IoT connected system using the test cases for the one of more messages.

In addition to one or more of the features described herein, or as an alternative, further embodiments may include that the IoT message constructor further includes: a message definition builder configured to define one or more fields for the one or more messages.

In addition to one or more of the features described herein, or as an alternative, further embodiments may include that the IoT message constructor further includes: a message schema builder configured to generate rules related to the properties of the one or more fields.

In addition to one or more of the features described herein, or as an alternative, further embodiments may include that the IoT message constructor further includes: a message configuration builder configured to determine all values of the fields in one or more messages.

In addition to one or more of the features described herein, or as an alternative, further embodiments may include that the test case constructor further includes: a field test case builder configured to build the test conditions for the one or more fields generated by the message definition builder.

In addition to one or more of the features described herein, or as an alternative, further embodiments may include that the test case constructor further includes: a message test case builder configured to build test conditions for the one or more messages.

In addition to one or more of the features described herein, or as an alternative, further embodiments may include that the IoT connected system is a conveyance system.

In addition to one or more of the features described herein, or as an alternative, further embodiments may include a regression data builder configured to perform a regression test.

According to another embodiment, a method for IoT data simulation and validation of an IoT connected system is provided. The method including: simulating, using an IoT message constructor, live IoT data from a live IoT device of the IoT connected system in the form of one or more messages; generating, using a test case constructor, test cases for the one of more messages; and establishing, a simulation scenario builder, relationships between the one or more messages.

In addition to one or more of the features described herein, or as an alternative, further embodiments may include: validating, using an IoT data validator, live IoT data from the live IoT device of the IoT connected system using the test cases for the one of more messages.

In addition to one or more of the features described herein, or as an alternative, further embodiments may include: defining, using a message definition builder, one or more fields for the one or more messages.

In addition to one or more of the features described herein, or as an alternative, further embodiments may include: generating, using a message schema builder, rules related to the properties of the one or more fields.

In addition to one or more of the features described herein, or as an alternative, further embodiments may include: determining, using a message configuration builder, all the values of the one or more messages.

In addition to one or more of the features described herein, or as an alternative, further embodiments may include: building, using a field test case builder, test conditions for the one or more fields generated by the message definition builder.

In addition to one or more of the features described herein, or as an alternative, further embodiments may include: building, a message test case builder, test conditions for the one or more messages.

In addition to one or more of the features described herein, or as an alternative, further embodiments may include that the IoT connected system is a conveyance system.

In addition to one or more of the features described herein, or as an alternative, further embodiments may include: performing, a using a regression data builder, a regression test.

According to another embodiment, a computer program product embodied on a non-transitory computer readable medium is provided. The computer program product including instructions that, when executed by a processor, cause the processor to perform operations including: simulating, using an IoT message constructor, live IoT data from a live IoT device in the form of one or more messages; generating, using a test case constructor, test cases for the one of more messages; and establishing, a simulation scenario builder, relationships between the one or more messages.

In addition to one or more of the features described herein, or as an alternative, further embodiments may include that the operations further include: validating, using an IoT data validator, live IoT data from the live IoT device using the test cases for the one of more messages.

In addition to one or more of the features described herein, or as an alternative, further embodiments may include a processed data parser configured to capture processed data and build test cases against it so that any other process-generated data can be tested for continuous validation.

In addition to one or more of the features described herein, or as an alternative, further embodiments may include a global library configured to create custom commands.

In addition to one or more of the features described herein, or as an alternative, further embodiments may include that the global library includes one or more functions that can be called from anywhere within a source code.

In addition to one or more of the features described herein, or as an alternative, further embodiments may include that the function is a #PdCapture function or a #CallAPI function.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The present disclosure is illustrated by way of example and not limited in the accompanying figures in which like reference numerals indicate similar elements.
FIG. 1 is a schematic illustration of an elevator system that may employ various embodiments of the present disclosure;
FIG. 2 is a schematic block diagram illustration of an IoT data simulator and validator platform for use with an IoT connected system similar to the elevator system of FIG. 1, in accordance with an embodiment of the present disclosure;
FIG. 3 is a schematic block diagram illustration of an IoT message simulator of the IoT data simulator and validator platform of FIG. 2, in accordance with an embodiment of the present disclosure;
FIG. 4 is a schematic block diagram illustration of a regression data builder of the IoT data simulator and validator platform of FIG. 2, in accordance with an embodiment of the present disclosure;
FIG. 5 is a schematic block diagram illustration of an IoT data validator of the IoT data simulator and validator platform of FIG. 2, in accordance with an embodiment of the present disclosure; and
FIG. 6 is a flow chart of a method for IoT data simulation and validation of an IoT connected system similar to the elevator system of FIG. 1, in accordance with an embodiment of the disclosure.

### DETAILED DESCRIPTION

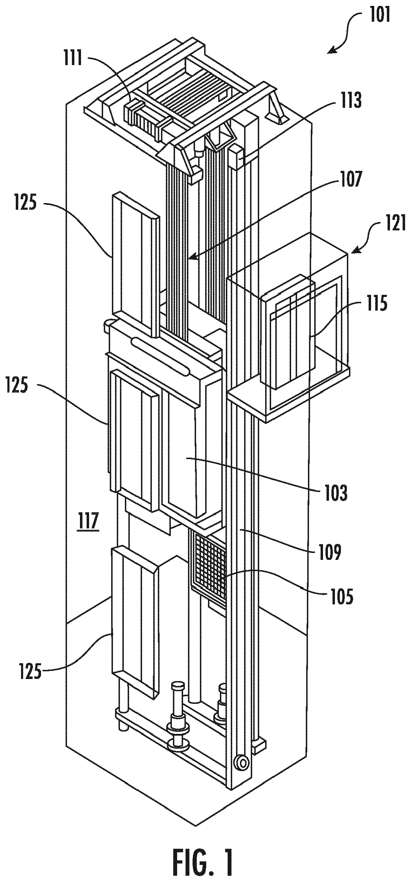

FIG. 1 is a perspective view of an elevator system 101 including an elevator car 103, a counterweight 105, a tension member 107, a guide rail 109, a machine 111, a position reference system 113, and a controller 115. The elevator car 103 and counterweight 105 are connected to each other by the tension member 107. The tension member 107 may include or be configured as, for example, ropes, steel cables, and/or coated-steel belts. The counterweight 105 is configured to balance a load of the elevator car 103 and is configured to facilitate movement of the elevator car 103 concurrently and in an opposite direction with respect to the counterweight 105 within an elevator shaft 117 and along the guide rail 109.

The tension member 107 engages the machine 111, which is part of an overhead structure of the elevator system 101. The machine 111 is configured to control movement between the elevator car 103 and the counterweight 105. The position reference system 113 may be mounted on a fixed part at the top of the elevator shaft 117, such as on a support or guide rail, and may be configured to provide position signals related to a position of the elevator car 103 within the elevator shaft 117. In other embodiments, the position reference system 113 may be directly mounted to a moving component of the machine 111, or may be located in other positions and/or configurations as known in the art. The position reference system 113 can be any device or mechanism for monitoring a position of an elevator car and/or counter weight, as known in the art. For example, without limitation, the position reference system 113 can be an encoder, sensor, or other system and can include velocity sensing, absolute position sensing, etc., as will be appreciated by those of skill in the art.

The controller 115 is located, as shown, in a controller room 121 of the elevator shaft 117 and is configured to control the operation of the elevator system 101, and particularly the elevator car 103. For example, the controller 115 may provide drive signals to the machine 111 to control the acceleration, deceleration, leveling, stopping, etc. of the elevator car 103. The controller 115 may also be configured to receive position signals from the position reference system 113 or any other desired position reference device. When moving up or down within the elevator shaft 117 along guide rail 109, the elevator car 103 may stop at one or more landings 125 as controlled by the controller 115. Although shown in a controller room 121, those of skill in the art will appreciate that the controller 115 can be located and/or configured in other locations or positions within the elevator system 101. In one embodiment, the controller may be located remotely or in the cloud.

The machine 111 may include a motor or similar driving mechanism. In accordance with embodiments of the disclosure, the machine 111 is configured to include an electrically driven motor. The power supply for the motor may be any power source, including a power grid, which, in combination with other components, is supplied to the motor. The machine 111 may include a traction sheave that imparts force to tension member 107 to move the elevator car 103 within elevator shaft 117.

Although shown and described with a roping system including tension member 107, elevator systems that employ other methods and mechanisms of moving an elevator car within an elevator shaft may employ embodiments of the present disclosure. For example, embodiments may be employed in ropeless elevator systems using a linear motor to impart motion to an elevator car. Embodiments may also be employed in ropeless elevator systems using a hydraulic lift to impart motion to an elevator car. FIG. 1 is merely a non-limiting example presented for illustrative and explanatory purposes.

In other embodiments, the system comprises a conveyance system that moves passengers between floors and/or along a single floor. Such conveyance systems may include escalators, people movers, etc. Accordingly, embodiments described herein are not limited to elevator systems, such as that shown in Figure 1. In one example, embodiments disclosed herein may be applicable conveyance systems such as an elevator system 101 and a conveyance apparatus of the conveyance system such as an elevator car 103 of the elevator system 101. In another example, embodiments disclosed herein may be applicable conveyance systems such as an escalator system and a conveyance apparatus of the conveyance system such as a moving stair of the escalator system.

The embodiments disclosed herein seek to provide a cloud based internet of things (IoT) data validator platform to ensure quality assurance of any IoT component using simulated IoT data with a built in test case collector and data validator. The IoT data simulator and validator platform includes a regression test data generator, a regression test result repository, and regression test reporting tools.

Advantageously, using the IoT data simulator and validator platform disclosed herein in the software development of an elevator system 101 of FIG. 1 will gain significant savings in development time and costs, while simultaneously ensuring dramatically improved quality of deliverables.

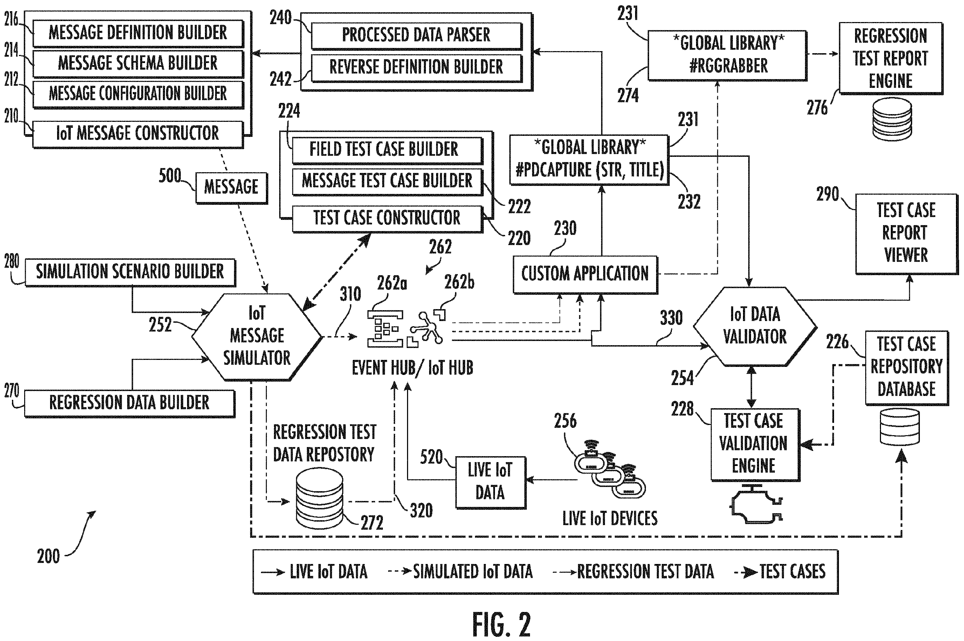

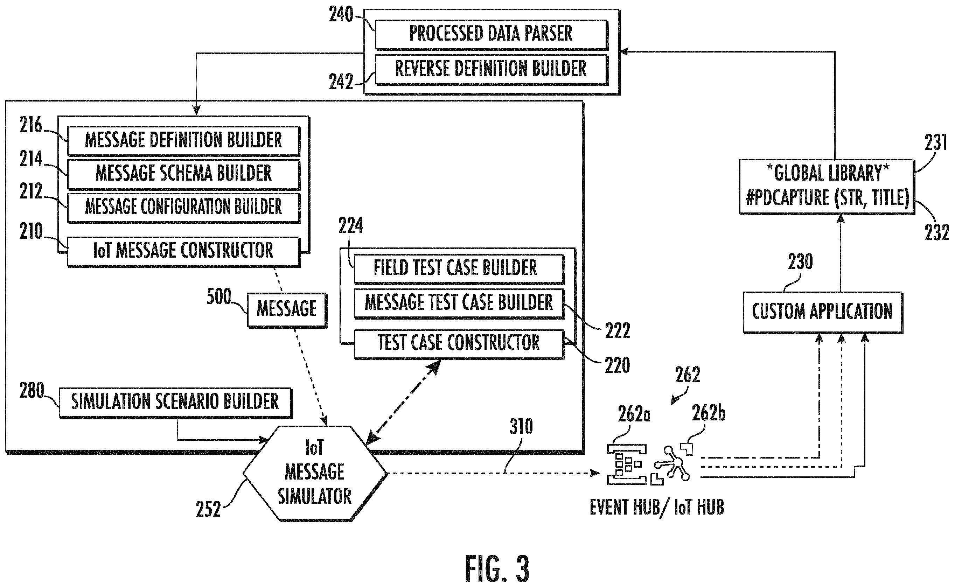

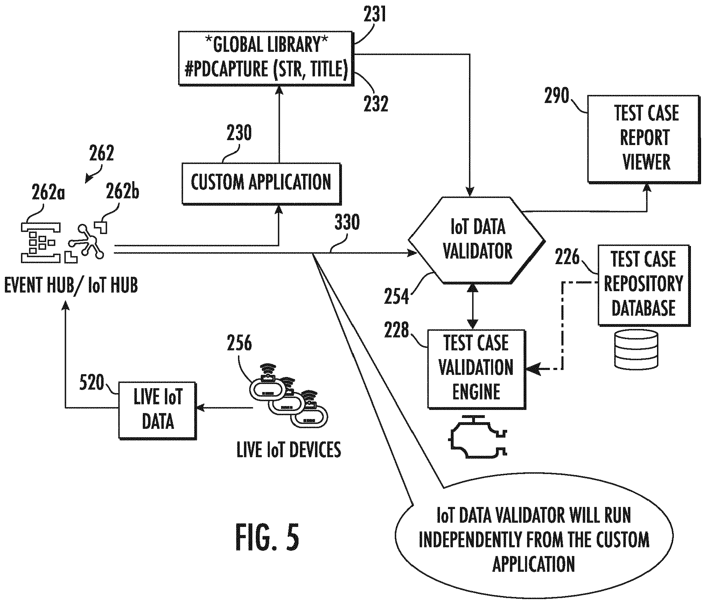

Referring now to FIGS. 2-5, a simulated IoT data flow 310 is illustrated in FIGS. 2, 3, and 4, in accordance with an embodiment of the present disclosure. FIG. 2 illustrates a block diagram of an IoT data simulator and validator platform 200 to provide end-to-end testing of an IoT connected system, such as, for example, the elevator system 101 of FIG. 1, according to an embodiment of the present disclosure. It is understood that while the elevator system 101 is illustrated for ease of explanation, the embodiments disclosed herein may be applicable to any IoT connected system.

The IoT data simulator and validator platform 200 may include simulated input data 500 generation, software quality assurance data, and regression testing, which provide the end-to-end testing of the elevator system 101 of FIG. 1. The simulated input data may be referred to as messages 500. As shown in FIG. 2, the IoT data simulator and validator platform 200 may include an IoT message simulator 252, regression data builder 270, an IoT data validator 254, an IoT message constructor 210, a test case constructor 220, a custom application 230, a processed data parser 240, one or more live IoT devices 256 (e.g., any IoT connected device of an IoT connected system), an IoT data receiving end points 262 (e.g., an event hub 262a, IoT hub 262b or web socket), a regression data builder 270, a regression test data repository, 272 a regression test report engine 276, a simulation scenario builder 280, and a test case report viewer 290. It should be appreciated that, although particular systems are separately defined in the schematic block diagram of FIG. 2, each or any of the systems may be otherwise combined or separated via hardware and/or software.

The IoT message simulator 252 is configured to simulate live IoT data 520 from live IoT devices 256 by generating messages 500 to satisfy the testing conditions that are authored in the test case constructor 220. The IoT message simulator is configured to supply the simulated data for testing as messages 500 during the development phase of software. The IoT message simulator 252 includes an IoT message constructor 210, a test case constructor 220, a simulation scenario builder 280, and a processed data parser 240. The processed data parser 240 may be optionally include to further define and tailor messages 500, as described further herein.

The IoT message constructor 210 includes a message definition builder 216, a message schema builder 214, and a message configuration builder 212. The message definition builder 216 is configured to define one or more fields for the message 500 such as a field name, field description, field group, etc. The message 500 is simulated data that may be received from the live IoT devices 256. The message definition builder 216 may begin to build a message by pre-populating the fields from an existing JSON file, an ability to import the message definition from an external system. The message configuration builder 212 is configured to generate test data using established rules, so that the messages 500 constructed by the IoT message constructor 210 will have variances but yet stay within defined parameters, which advantageously allows the IoT message constructor 210 to generate smarter simulated messages using defined message structure. The IoT message simulator 252 possesses flexible ways to send the simulated data in different environments to various IoT data receiving end points 262 that may include but are not limited to the event hub 262a and the IoT hub 262b. The field test case builder 224 possesses the ability to validate an individual field in a message 500, the ability to validate the message 500 with externally predefined conditions.

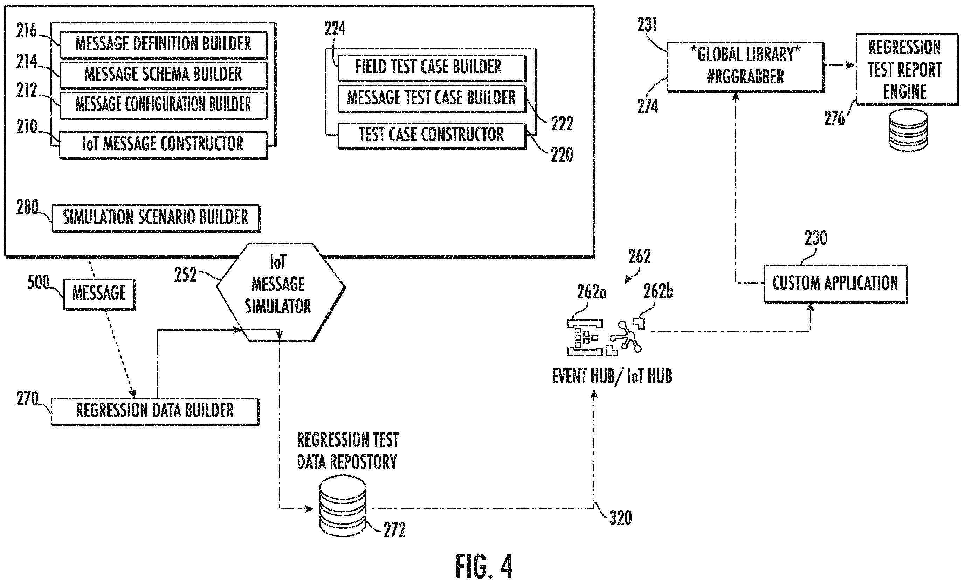

The message schema builder 214 configured to generate rules related to the properties of the fields in the message that were generated by the message definition builder 216. The rules may include but are not limited to message 500 frequency (i.e., how often each message 500 is received), message 500 version, external data look up, whether the field is "mandatory or optional" to be include in the message, and whether the field can contain a specific language character. The message schema builder 214 is configured to store the rules. Some rules may be seen at 422 on FIG. 4. The information in the message definition builder, and message schema builder, is statically bounded to the IoT message and should not be changed unless the business requirements change. The message schema builder 214 may also be configured to set a flag for data if the message 500 needs to be saved in a temporary message database to be retrieved by the custom application 230 at a later point, which advantageously makes the test data available to the custom application 230, without sending it through the IoT data receiving end points 262.

The information in the message definition builder 216 and message schema builder 214 are statically bounded to the IoT message and should not be changed unless the business requirements change.

The message configuration builder 212 is configured to determine all the configurable values of the message 500. The value for the message 500 may include but are not limited to message destination options, and frequency options.

A sample message may be "A123, IDL". The message definition may not displayed in the actual message. According to the message definition, the first field in the message is named "Unit ID" and the second field is named "OpMode". Thus, within the custom application 230 the first field may be referenced by the name, "Unit ID" and the second field may be referenced by "OpMode". The message configuration builder 212 will provide the information related to what values the first field may contain and the second field may contain. In the above sample message "A123, IDL", the first field named "Unit ID" contains the value of "A123" and the second filed named "OpMode" contains the value of "IDL", which indicates that the Opmode (Operation Mode) is "Idle". The custom application 230 may display "Ready to be use" or "IDLE" in the screen when the second filed in the input message contains "IDL"

The simulated IoT messages 500 can be configured to satisfy the business cases that need to be tested each time the IoT message simulator 252 is run. The message configuration builder 212 could contain a different configuration per each simulation run.

In one example of the operation of the IoT message constructor 210, a message 500 that is a heartbeat message may have two fields defined by the IoT message definition builder 216 and the fields may be called "Unit ID" and "OpMode". The properties in the message schema builder 214 for a heartbeat message may indicated that the fields of "Unit ID" and "OpMode" are required values in every heartbeat message. The message configuration builder 212 may set the heart beat message values as follows, "Unit IDs in the heartbeat messages are to be populated from the list of 10 unit ID values (A123, A124, A125, ..., A129, A130, A131, A132)" and "OpMode in the heartbeat messages are to be populated from the list of 20 OpModes values ("IDL", "PRK", "LDL",... "OOS")". The fields named "Unit ID" and "OpMode" in the message 500 are fixed properties of the message 500 and are part of every heartbeat message in this example. However, the value of the Unit ID and OpMode are configurable per simulation. For each simulation, the IoT message simulator 252 can produce variable messages 500 as configured in the message configuration builder 212.

The test case constructor 220 is configured to generate test cases for the simulated data (i.e., messages 500) generated by the IoT message constructor 210. The test case constructor 220 includes a field test case builder 224 and a message test case builder 222.

The field test case builder 224 is configured to build the test conditions for the various fields in the IoT message 500 generated by the IoT message constructor 210, while the message test case builder 222 is configured to build test conditions for the overall IoT message 500 itself. The test conditions have to be matched with the message definition so that IoT data validator 254 will know which message to be validated/tested with what test conditions. Then these test cases will be saved in the test case repository 226. The test case repository 226 is shared with the IoT data validator for validation of the live IoT data 520, fed by the live IoT devices 256, into the custom application 230. The field test case builder 224 may have the ability to define multiple data validation rules and to validate the data against another message 500 or external data source.

The message test case builder 222 may be configured to add multiple test conditions to the message 500. The multiple test conditions may include a negative test case. Each test case and validation rules will have a unique ID, so that it can be traced back to where the validation failed. The field test case builder 224 includes the ability to define multiple data validation rules for a field in the message 500 and the ability to validate the data against another message 500 or external data source.

The IoT message simulator 252, also includes a simulation scenario builder 280. The simulation scenario builder 280 contains information related to the generation of the IoT messages 500 and not their contents. The simulation scenario builder 280 assumes that the necessary messages are already defined in the IoT message constructor 210. The simulator scenario builder 280 is configured to create the relationship between different IoT messages used to satisfy any particular scenario.

The simulation scenario builder 280 configured to enforce the IoT data generation sequence, or conditions, when there are more than one simulated IoT message types. Some examples of messages types may include but are not limited to a heartbeat message, a beacon message, and a commissioning message. When there are more than one message 500 (i.e., data) types to simulate, the simulation scenario builder 280 is configured to create a rule that will specify the sequence of the messages to be produced. Some rules of the simulation scenario builder 280 can be created based on multiple triggers such as: the value of the data in a message 500, quantity of a message 500, or the time interval between multiple consecutive messages 500.

The simulation scenario builder 280 creates and stores the various rules to enforce when each message 500 is generated. The simulation scenario builder 280 may to create a rule regarding the fields. For example, all associated messages 500 other than commissioning messages must include one of the values in "unit_ids" already used in the commission message. The simulation scenario builder 280 may create a rule that will specify the sequence of the messages to be produced such that a specific message type must be generated prior to the other messages 500 type. For example, a commission message 500 may be required to be sent to the event hub 262a before any other message 500. The simulation scenario builder 280 is configured to establish relationships between messages 500 based on the nature of the messages 500. In one example, some messages 500 can be generated independently from other messages 500. In another example some messages 500 can also be dependent on other messages 500, such as, for example, when a commission message 500 has to be sent before heartbeat message 500, in order to be sent to the event hub 252a. The unit-Id in a heartbeat message will be selected by a pre-established list that is generated by a commission message.

In another example, the IoT message simulator 252 may needs to generate two different types of messages 500 that include a heartbeat message and an event log message. In this example, the simulation scenario builder 280 can create a rule that says "when the value of "OpMode" field in the heartbeat message 500 is equal to "OOS", it should trigger a process to generate an event log message 500, which has been previously configured in the message configuration builder 212. Therefore, whenever the heartbeat message with an Opmode field value of "OOS" is generated, it will trigger a matching event log message 500 to be generated from the IoT message simulator 252. In this example, if the OpMode field value in the heartbeat message is not "OOS", then the heartbeat message 500 will not have a matching event log message 500. An event log message will not be created alone without the triggering heartbeat message.

The IoT data validation platform 200 may utilize a processed data parser 240 to more specifically tailor the messages 500. The messages 240 may be specifically tailored based upon the type of business or specific customer.

The processed data parser 240 may configured to capture processed data and build test cases against it so that any other process-generated data can be tested for continuous validation. Custom commands may be created in the global library 231 so that the appropriate commands can be called/referenced from anywhere in the custom application 230. The IoT message simulator 252 contains the user interface for a processed data receiver configured to capture processed data. The global library 231 may include functions that can be called from anywhere within the source code from the custom application 230. The function in the source code may include pre-built proprietary functions such as #PdCapture function 232 or a #CallAPI function for processed data and a #RgGrabber function 274 to grab any output as a regression test result and save it to the regression test repository database. The #PdCapture function 232 may be a proprietary way to capture processed data and build test cases against it for ongoing validation. The #RgGrabber function 274 may be a proprietary way to capture any strings or output to compare in the regression test report engine 276.

The process data parser 240 may include a reverse definition builder 242 configured to parse the processed data and add test conditions. For the processed data to be included in the IoT data validator 254 for testing, it needs be parsed and the test conditions added to a particular field.

The IoT data validator 254 uses the live IoT data 520 (not the simulated data) from live IoT devices 256 and validate the live IoT data 520 against the test cases as authored in test case constructor 220 and saved in the test case repository database 226. While the IoT message simulator 252 is configured to supply the simulated data for testing as messages 500 during the development phase of software, the IoT data validator 254 is intended to be used to test/validate real live production data coming from live IoT devices 256. The only common component between the IoT message simulator 252 and the IoT data validator 254 may be the test case repository 226 populated by the test case constructor 220 from the IoT message simulator 252. The IoT data validator 254 is configured to validate live IoT data 520 from the live IoT devices 256 using the test cases established from the test case constructor in the IoT message simulator 252.

The IoT data validator 254 runs the test cases against all incoming live IoT data 520 from the live IoT devices 256 and registers the test results in the test case repository database 226, which will be accessible by the test case report viewer 290. Also included is a user configurable notification mechanism that will trigger a text message or email to the designated recipients, when any violation is reported during the validation. For example, if the live heartbeat message contains a value in the OpMode field that is not one of the 110 OpMode defined by a business department, then the IoT data validator 254 will fail this particular test case. That value may have a case id of 111, then as IoT data validator 254 detects there is an input message that failed the test validation, it could send a text message to pre-registered phone number, "test case 111 was trigger, and it is fatal condition, requires immediate attention".

The test case repository database 226 is configured to receive test cases and save the test cases within the test case repository database 226. The test case validation engine 228 is configured to convert the test cases to functions and/or processing routines for validation. Input messages will be validated through the test case validation engine 228 and the results of this validation will be logged in the test case repository databases 226. The test case report viewer 290 will display the test results from the test case repository database 226.

The regression data builder 270 is the configured to perform regression testing, which is a unique testing process in software development that is intended to ensure the integrity of the output for the entire system.

The purpose of regression testing performed by the regression data builder 270 is to test the output of the entire customer application 230 so that any logic changes made, in one part of the customer application 230, will not cause unintended changes in any other parts of the custom application 230. The output of the custom application 230 should have the same result from the previous run and the only differences, if any, should be from the results of the newly updated routine. The regression data builder 270 may utilize some assumptions including but not limited to (1) always use the identical test input data for each regression test and (2) any databases that will be used in the custom application 230 need to be reset to the original state.

The purpose of the regression testing is not to test the input data and the custom application 230 may assume that all the input data is good for all conditions in the customer application 230. To support the correct regression test, the regression data builder 270 will utilize the IoT message simulator 252 to produce the necessary IoT messages 500 that satisfies all testing conditions in the customer application 230, then it will save those messages to the regression test data repository 272. Unless there are any new business requirement to add new test data, the regression test will pull the same set of input data from the regression test data repository database 272. Since the input data is identical, expectation is that the output of the custom application 230 will be identical to the previous run. If there are any changes in the output, it needs to be verified that the changes are an intended result of any updates in the codes for the test. All compared results will be registered in the regression test report engine 276 for review later.

The regression data builder 270 may look for specific key words within the source code so that it will automatically be able to generate output strings. These strings will then be passed to the regression test report engine 276, so that it can be kept as the data set for regression testing review. The regression data builder 270 will perform comprehensive regression testing of the custom application 230, which will automatically generate the regression testing output.

Custom commands may be created in the global library 21 so that the appropriate commands can be called/referenced from anywhere in the custom application 230 to store any output strings to the regression test repository database.

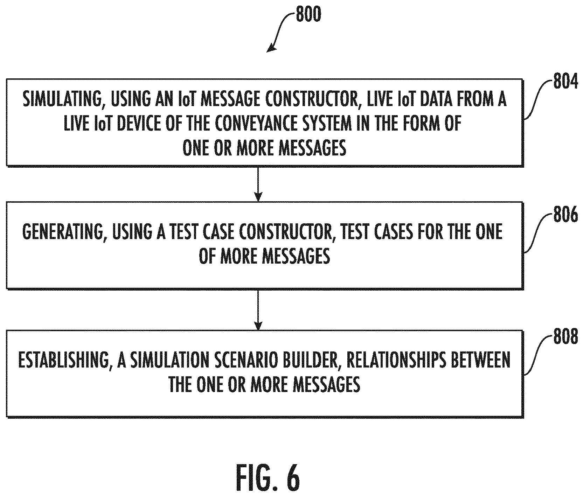

Referring now to FIG. 6, while referencing components of FIGS. 1-5. FIG. 6 shows a flow chart of a method 800 for IoT data simulation and validation of an IoT connected system is illustrated, in accordance with an embodiment of the disclosure. In an embodiment, the method 800 may be performed by at least one of the IoT data simulator and validator platform 200. In an embodiment, the IoT connected system is a conveyance system. In an embodiment the conveyance system is an elevator system 101.

At block 804, an IoT message constructor 210 is configured to simulate live IoT data 520 from a live IoT device 256 in the form of one or more messages 500. The IoT message constructor 210 may further comprise a message definition builder 516 configured to define one or more fields for the one or more messages 500. The IoT message constructor 210 may further comprise a message schema builder 214 configured to generate rules related to the properties of the one or more fields. The IoT message constructor 210 may further comprise a message configuration builder 212 configured to determine all values in the fields of the one or more messages 500.

At block 806, a test case constructor 220 is configured to generate test cases for the one of more messages 500. The test case constructor 220 may further comprise a field test case builder 222 configured to build the test conditions for the one or more fields generated by the message definition builder 216. The test case constructor 220 may further comprise a message test case builder 222 configured to build test conditions for the one or more messages 500.

At block 808, a simulation scenario builder 280 is configured to establish relationships between the one or more messages 500.

The method 800 may further comprise that an IoT data validator 254 is configured to validate live IoT data 520 from the live IoT device 256 of the conveyance system using the test cases for the one of more messages 500.

While the above description has described the flow process of FIG. 6 in a particular order, it should be appreciated that unless otherwise specifically required in the attached claims that the ordering of the steps may be varied.

As described above, embodiments can be in the form of processor-implemented processes and devices for practicing those processes, such as processor. Embodiments can also be in the form of computer program code (e.g., computer program product) containing instructions embodied in tangible media (e.g., non-transitory computer readable medium), such as floppy diskettes, CD ROMs, hard drives, or any other non-transitory computer readable medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, loaded into and/or executed by a computer, or transmitted over some transmission medium, such as over electrical wiring or cabling, through fiber optics, or via electromagnetic radiation, wherein, when the computer program code is loaded into and executed by a computer, the computer becomes an device for practicing the exemplary embodiments. When implemented on a general-purpose microprocessor, the computer program code segments configure the microprocessor to create specific logic circuits.

The term "about" is intended to include the degree of error associated with measurement of the particular quantity and/or manufacturing tolerances based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

Those of skill in the art will appreciate that various example embodiments are shown and described herein, each having certain features in the particular embodiments, but the present disclosure is not thus limited. Rather, the present disclosure can be modified to incorporate any number of variations, alterations, substitutions, combinations, sub-combinations, or equivalent arrangements not heretofore described, but which are commensurate with the scope of the present disclosure. Additionally, while various embodiments of the present disclosure have been described, it is to be understood that aspects of the present disclosure may include only some of the described embodiments. Accordingly, the present disclosure is not to be seen as limited by the foregoing description, but is only limited by the scope of the appended claims.

## Claims

1. An IoT data simulator and validator platform for an IoT connected system, the IoT data simulator and validator platform comprising:
an IoT message simulator comprising:
an IoT message constructor configured to simulate live IoT data from a live IoT device of the IoT connected system in the form of one or more messages;
a test case constructor configured to generate test cases for the one of more messages; and
a simulation scenario builder configured to establish relationships between the one or more messages.

2. The IoT data simulator and validator platform of claim 1, further comprising:
an IoT data validator configured to validate live IoT data from the live IoT device of the IoT connected system using the test cases for the one of more messages.

3. The IoT data simulator and validator platform of claim 1 or 2, wherein the IoT message constructor further comprises:
a message definition builder configured to define one or more fields for the one or more messages.

4. The IoT data simulator and validator platform of claim 3, wherein the IoT message constructor further comprises:
a message schema builder configured to generate rules related to the properties of the one or more fields; and/or
a message configuration builder configured to determine all values of the fields in one or more messages.

5. The IoT data simulator and validator platform of claim 3 or 4, wherein the test case constructor further comprises:
a field test case builder configured to build the test conditions for the one or more fields generated by the message definition builder; and/or
a message test case builder configured to build test conditions for the one or more messages.

6. The IoT data simulator and validator platform any preceding claim, wherein the IoT connected system is a conveyance system.

7. The IoT data simulator and validator platform of any preceding claim, further comprising:
a regression data builder configured to perform a regression test.

8. The IoT data simulator and validator platform of any preceding claim, further comprising:
a regression data builder configured to perform a regression test.

9. The IoT data simulator and validator platform of any preceding claim, further comprising:
a processed data parser configured to capture processed data and build test cases against it so that any other process-generated data can be tested for continuous validation.

10. The IoT data simulator and validator platform of any preceding claim, further comprising a global library configured to create custom commands;
optionally wherein the global library includes one or more functions that can be called from anywhere within a source code, further optionally wherein the function is a #PdCapture function or a #CallAPI function.

11. A method for IoT data simulation and validation of an IoT connected system, the method comprising:
simulating, using an IoT message constructor, live IoT data from a live IoT device of the IoT connected system in the form of one or more messages;
generating, using a test case constructor, test cases for the one of more messages; and
establishing, a simulation scenario builder, relationships between the one or more messages.

12. The method of claim 11, further comprising:
validating, using an IoT data validator, live IoT data from the live IoT device of the IoT connected system using the test cases for the one of more messages.

13. The method of claim 11 or 12, further comprising:
defining, using a message definition builder, one or more fields for the one or more messages; and/or
generating, using a message schema builder, rules related to the properties of the one or more fields; and/or
determining, using a message configuration builder, all the values of the one or more messages; and/or
building, using a field test case builder, test conditions for the one or more fields generated by the message definition builder; and/or
building, a message test case builder, test conditions for the one or more messages; and/or
performing, a using a regression data builder, a regression test.

14. The method of any of claims 11 to 13, wherein the IoT connected system is a conveyance system.

15. A computer program product embodied on a non-transitory computer readable medium, the computer program product including instructions that, when executed by a processor, cause the processor to perform operations comprising:
simulating, using an IoT message constructor, live IoT data from a live IoT device in the form of one or more messages;
generating, using a test case constructor, test cases for the one of more messages; and
establishing, a simulation scenario builder, relationships between the one or more messages.
